Europäisches Patentamt

(19) European Patent Office

Office européen des brevets

(11) Publication number: **0 002 115**
**B1**

(12) **EUROPEAN PATENT SPECIFICATION**

(45) Date of publication of patent specification: **17.06.81**

(51) Int. Cl.³: **C 02 F 9/00, E 03 D 5/016**

(21) Application number: **78300565.5**

(22) Date of filing: **30.10.78**

(54) Closed loop waste treatment and water recycling toilet system and method of operation.

(30) Priority: **11.11.77 US 850559**

(43) Date of publication of application:
**30.05.79 Bulletin 79/11**

(45) Publication of the grant of the European patent:
**17.06.81 Bulletin 81/24**

(84) Designated Contracting States:
**BE DE FR NL SE**

(56) References cited:
**US - A - 3 666 106**
**US - A - 3 776 383**
**US - A - 3 844 946**
**US - A - 3 900 394**
**US - A - 3 950 249**

(73) Proprietor: **THETFORD CORPORATION**
**7101 Jackson Road**
**Ann Arbor Michigan 48103 (US)**

(72) Inventor: **Coviello, Allan James**
**645 Hidden Valley Dr.**
**102 Ann Arbor Michigan 48104 (US)**
Inventor: **Bernardin, Frederick Eugene**
**2314 W. 17th Street**
**Wilmington Delaware 19806 (US)**
Inventor: **Kalb, Kathryn Reynolds**
**9760 Baude**
**Brighton Michigan 48116 (US)**

(74) Representative: **Williams, Trevor John et al,**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Closed loop waste treatment and water recycling toilet system and method of operation

The present invention relates to improvements in waste treatment and water recycling toilet systems.

It is more especially relevant to closed loop systems of the general type shown in the Specification of our United States Patent No. 3,950,249 discussed in greater detail below. Municipal-type sewage treatment systems, such as shown in the Specifications of United States Patents 3,953,327 and 3,964,998, and commonly referred to as "flow through systems" in contrast to "closed loop systems", also have some pertinence to the present invention.

United States Patent Specification 3,964,998 shows that it has been known biologically to lower the organic compound concentration in the sewage by treatment of the sewage under anoxic conditions followed by treatment under aerobic conditions. This sequence has been advantageous in that bacteria in the anoxic reactor utilise organics in the sewage to accomplish the breakdown of nitrates, thus requiring no addition of a supplemental organic source into the system. However, such a flow through system requires removal of sludge, thus creating the problem of sluge transport and disposal. Also, in a flow through system, some of the nitrates resulting from the treatment process flow out of the system and are thus not available for the treatment of organics at the anoxic stage. As a result, the organic load on the aerobic stage is increased, thus requiring a system with a large size aerobic stage.

Closed loop systems in the past have been advantageous in that no continuous external water supply is needed, thus minimising the unnecessary usage of potable water. Difficulties have arisen, however, out of deficiencies in the biological processes of these systems. As a result of these deficiencies, inadequate treatment of wastes often resulted in the production of obnoxious odours and colours in the flush water and a rapid accumulation of biological solids in the system.

It is an object of the present invention, therefore, to provide a waste treatment and water recycling toilet system which overcomes the problems of continuous or frequent sludge removal and fresh water influx, while providing effective management of nitrogen in the system so that it can be made of reasonable size, undesirable odours are avoided and a desired slower buildup of solids in the system is achieved.

Our above mentioned prior United States Patent No. 3950249 describes a multi-stage method of treating toilet waste and recycling treated liquid therefrom wherein said waste is received at a first toilet stage, treated liquid filtered from waste at a subsequent stage is passed to the first stage, and said waste is transferred, utilizing said liquid as a flushing medium, to a process in which organic materials are removed therefrom using bacterial action with the treated liquid then being filtered and returned to the first stage, anoxic conditions being produced and maintained in a second stage to which the waste and filtered material is passed from the first stage, liquid being transferred from a second stage to a third stage containing biologically active solids and mixed liquid and in which aerobic conditions are produced and maintained for removal of organic material by bacteria contained in a biologically active solids, mixed liquid containing nitrates being transferred from a third stage to a fourth stage in which the liquid is filtered for reuse in the first stage. This prior method, although providing a recycling toilet system which was intended to overcome the problems of need for continuous frequent sludge removal and fresh water influx, does suffer from a disadvantage due to the fact that the nitrogen in the system is not adequately managed and thus the bacterial action is not as efficient as it could be in order to minimise the build up of solids in the system and to facilitate the avoidance of undesirable odours.

According to the present invention, in the third stage, in addition to the removal of organic materials ammonium compounds in the transferred liquid are nitrified to oxidised nitrogen compounds with the liquid transferred to the fourth stage being maintained rich in oxidised nitrogen compounds whereby when such enriched liquid is passed to the second stage from the first stage the anoxic conditions in the second stage primarily cause breakdown of oxidised nitrogen compounds in the liquid therein with the production of nitrogen gas and bicarbonates. By having maximum nitrification in the aerobic stage and preventing denitrification during transit of the liquid from the aerobic stage to the anoxic stage the maximum amount of nitrates are available in the anoxic stage whereby with the intensification of the denitrification reaction in the anoxic stage there is an attendant increased digestion and conversion of solids into liquids and gases with the high nitrate concentration being derived from the system itself so that the system is entirely self sustaining at a high level of efficiency. There is not the same intense denitrification action possible in the anoxic stage of the prior system as disclosed in our earlier United States Patent No. 3,950,249 since a degree of denitrification is permitted before the anoxic stage in that a sedimentation chamber is provided between the aerobic stage and the filtering stage. In this relatively quiescent period there is no flow of air with a consequent lack of oxygen in the liquid whereby the bacteria present cause denitrification and hence a reduction in nitrate concentration. Preferably the liquid in the present invention is passed directly from the third, aerobic, stage to the fourth, filtering, stage to maximise the amount of oxidised nitrogen compounds in the filtered liquid due to the lack of any time in which the liquid containing nitrates is maintained under anoxic conditions in contact with bacteria.

Preferably also the material in the second stage is mechanically agitated to enhance breakdown of the nitrate compounds into nitrogen and bicarbonates. This contrasts with the slower action utilized in our prior patent number 3,950,249 where denitrification is less intense and a relatively slow action is used to breakdown the solid material into smaller pieces which can pass through the filter into the aerobic treatment chamber. Very rapid breakdown is possible with the agitated mixture of the presently preferred method.

The present invention also provides a closed loop waste treatment and water recycling toilet system for use with the method of the invention.

Preferably the communication from the aerobic station to the filtering station comprises a pump adapted to pass liquid in excess of the capacity of the filtering station continuously to flush the filtering station with excess unfiltered liquid being returned to the aerobic station via a return conduit. This continuous flushing action is desirable in order to maintain a rapid flow of unfiltered liquid back to the aerobic station in order to prevent denitrification and also to serve to flush the solid particles from the filters continuously back into the aerobic station in the absence of the sedimentation stage provided in the construction of our earlier United States Patent No. 3,950,249 referred to above.

Preferably an adsorption station and a disinfection station are provided between the filtering station and the toilet station. The adsorption station is operable to produce colourless and odourless liquid and the disinfection station being operable to disinfect the colourless and odourless liquid. While the delivery system may include a single flush-type toilet, it is to be understood that it can include a plurality of toilets or a number of toilets and a number of urinals and, as a result, the term toilet, as used herein, is inclusive of all the above.

While the process of biological denitrification is complex and not yet fully understood, it is generally accepted that facultative bacteria which exist in the sludge satisfy their metabolic requirements preferentially through the dissolved oxygen in the liquid. However, if the supply of dissolved oxygen is sufficiently low, "anoxic" conditions are said to exist, and under these conditions, bacteria will reduce oxygen-containing compounds such as nitrates or other oxidised nitrogen compounds. The anoxic reactor in this invention is maintained under these conditions. Bacteria in the reactor utilise toilet waste as the source of organics needed to effect the breakdown of nitrates or other oxidised nitrogen compounds in the reactor to nitrogen gas, and in the process the bacteria substantially lower the amount of organic waste in the reactor and produce bicarbonates. The nitrogen gas produced in this reactor is vented from the system thus reducing the concentration of dissolved solids. Liquid effluent from the anoxic reactor is then transferred to the aerobic digestion chamber.

Effluent from the anoxic reactor is high in concentration of bicarbonates and ammonium compounds and low in concentrations of nitrates. It is thus seen that the anoxic reactor is not located in the system to accomplish the breakdown of nitrogenous compounds in the toilet waste, such as ammonia, but to remove nitrates from the flush water and a substantial quantity of organic material from the toilet waste. In addition, the anoxic reactor produces bicarbonates necessary for the complete oxidation of the ammonium compounds in subsequent processes of the toilet waste treatment system.

The aerobic digestion chamber contains biologically active solids and aeration means to provide sufficient oxygen to effect both the oxidation of organic compounds, and the nitrification of nitrogen compounds in the mixed liquid. Although biological nitrification is also not yet fully understood, it has been found that under conditions of sufficient oxygen, nitrifying bacteria in the biologically active solids are able to oxidise ammonium compounds and convert these compounds to nitrates. The aerobic digestion chamber of the present invention is maintained under these conditions so that bacteria utilise the bicarbonates in the mixed liquid as the necessary carbon source to accomplish the desired nitrification. Effluent from the aerobic digestion chamber is thus low in ammonium and carbonaceous compounds and high in nitrates.

As used herein, the expression "biologically active" solids includes bacteria in both suspended growth form and in attached growth form. In the suspended growth reactor, the bacteria are in suspension in a material commonly called "activated sludge" and in the attached growth reactor the bacteria are attached to solid bodies. Thus while the invention is later particularly described by way of example with respect to the use of activated sludge in the aerobic digestion chamber, it is to be understood that it is within the purview of this invention to use bacteria in the attached mode in the aerobic digestion chamber.

Screened liquid is removed from the aerobic digestion chamber and passed under pressure through filters which remove suspended solids, colloidal matter and large amounts of bacteria from the liquid. Filtrate is then transferred to adsorption means which includes a bed of activated carbon. The internal pore structure of activated carbon and the affinity of activated carbon for organic matter provide for the removal of undesirable colour and odour from the liquid. Liquid is disinfected and then transferred to a water storage tank from which, on demand from the delivery actuator, it is delivered to the toilet, thus completing the closed loop cycle.

Due to the closed loop arrangement, nitrates produced in the aerobic digestion chamber are present throughout the filtering, adsorption, disinfecting and water return and delivery systems. The presence of nitrates in the liquid in the filtering and adsorption systems prevents the reduction of sulphates which may also be present in the liquid. The reduction of sulphates would otherwise cause the production of hydrogen sulphide which has a readily recognisable obnoxious odour. Nitrates are still present in the liquid as it is delivered with toilet waste into the anoxic chamber, thus inducing greater biological destruction of organic wastes and increased production of bicarbonates for use in the aerobic digestion chamber. The management of nitrates in the present system thus allows for prevention of hydrogen sulphide or other obnoxious odours, efficient biological treatment of toilet waste and corresponding reduction in the requirements for aerobic digestion chamber size.

The present system provides indefinite retention of sludge solids. This ensures sufficient micro-organism age to accomplish the desired results in the biological treatment processes. In the present system, the amount of biologically active solids in the aerobic chamber and the amount of organic material supplied from the anoxic reactor are balanced such that minimum sludge accumulation rates are achieved in the aerobic chamber. Elimination of excess sludge production and the need for disposal thereof reduces the potential pollution of external surface and subsoil water supplies. Also, the recycle and reuse of water reduces the unnecessary usage and pollution of water supplies.

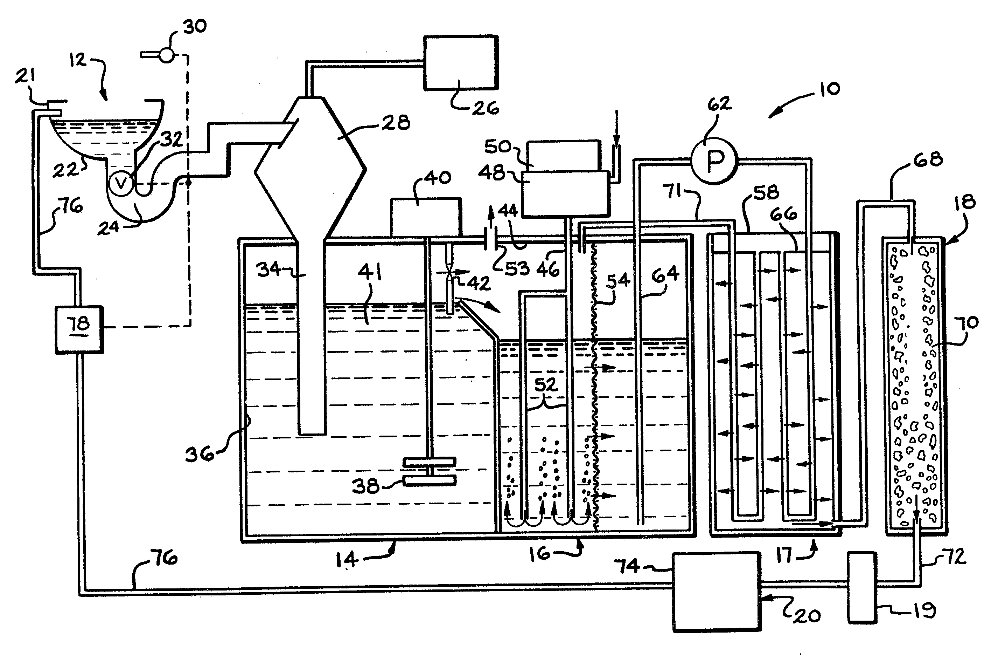

The invention will become further apparent from a consideration of the following description given by way of example with reference to the accompanying drawing, the single figure of which is a diagrammatic view of a closed loop waste treatment and water recycling system embodying the present invention.

Referring to the drawing, a closed loop waste treatment and water recycling toilet system 10 comprises a waste delivery system 12, an anoxic reactor 14, an aerobic digestion station 16, a filtering system 17, an adsorption system 18, a disinfecting system 19, and a water return system 20. The delivery system 12 includes a toilet 21 having a waste deposit bowl 22 and an outlet passage 24. The system 12 also includes a vacuum pump 26, a vacuum chamber 28, and a demand actuator 30 operatively associated with a toilet valve 32 located in the passage 24. In response to manual operation of the actuator 30, the valve 32 is opened allowing the contents of the bowl 22 to be drawn by means of the pump 26 through the passage 24 and into the vacuum chamber 28. The vacuum chamber 28 operates to break up solid particles in the toilet waste, and contains a discharge conduit 34 through which the broken up toilet solids and flush water are transferred to the anoxic reactor 14.

The anoxic reactor 14 has sludge containing bacteria in it and is located in the system 10 to provide partial biological treatment of influent toilet waste and denitrification of nitrates contained in the influent. The reactor 14 includes a treatment chamber 36 and an agitator 38 driven by a motor 40. The motor 40 is operated intermittently to provide for the intimate physical contact of toilet waste, flush water and bacteria in the anoxic sludge. Bacteria in the reactor utilise toilet waste as the source of organics needed to effect the breakdown of nitrates to nitrogen gas and produce bicarbonates and in the process the bacteria substantially lower the amount of organic waste in the reactor. When the motor 40 is off, the solid matter settles in chamber 36. The chamber 36 is maintained under low oxygen conditions in which the primary compound being reduced by bacteria in the anoxic sludge is nitrate; such conditions being known as anoxic conditions. The compounds produced in the treatment chamber 36 under these conditions include nitrogen gas and bicarbonates. Gases are released from the chamber 36 through a conventional one-way vent valve 42. The one-way valve 42 prevents the entry of oxygen into chamber 36 and thereby maintains a low concentration of dissolved oxygen in the partially treated mixture 41 in the chamber 36. Introduction of influent to the chamber 36 causes wash-over of partially treated liquid 41 from the chamber 36 to the aerobic digestion station 16 so as to control the fluid level in the chamber 36.

The aerobic digestion station 16 is located in the system 10 downstream from and adjacent to the reactor 14 to provide for the biological treatment of denitrified effluent from the anoxic reactor 14 and the nitrification of ammonium compounds in the effluent to produce nitrates. The aerobic station 16 comprises a treatment chamber 44 containing biologically active solids in the suspended growth mode and aeration means 46 which includes a pump 48 driven by a motor 50 operable to deliver air through conduits 52 to denitrified liquid in the chamber 44. The aeration means 46 agitates the material in chamber 44 and provides for mixing of the denitrified liquid and activated sludge contained in the chamber 44, and also provides an oxygen source for bacteria in the activated sludge to accomplish the nitrification process. The bacteria use bicarbonates in the liquid as the carbon source necessary to effect the oxidation of nitrogenous compounds, such as ammonia, to produce nitrates. In the process, additional organic matter in the waste is digested in the chamber 44. The amount of air admitted to the treatment chamber 44 is preferably controlled by conventional control means to provide for evaporation of liquid through a vent 53 sufficient to maintain desired fluid levels throughout the system 10.

Treated liquid in the chamber 44 passes through a screen 54 for flow through a pipe 64 into the filtering system 17. The filtering system 17 provides means for separating solids, sludge and organic matter from biologically treated liquid and passing a clarified effluent on to the adsorption system 18. In the system 17, liquid is drawn from the aerobic chamber 44 by means of a pump 62 through the conduit 64 and is introduced under pressure to tubular membranes 66. The rate of flow of liquid to the filtering system 17 is purposely made substantially greater than the filtering capacity of the filters 66. As a result, some of the liquid does not pass through the filters but instead washes over the surfaces of the filters thus cleaning these surfaces and then returns through the line 71 to the aerobic chamber 44.

Filtered liquid passes through a conduit 68 to a bed of activated carbon 70 in the adsorption system 18. The internal pore structure of the activated carbon 70 in the adsorption system 18, and the affinity of this activated carbon for organic matter provide for the removal of undesirable colour and odour from the filtered liquid.

Colourless, odourless liquid from the adsorption system 18 is then transferred through a conduit 72 to a disinfection system 19 which is a conventional structure, such as the unit shown in the Specification of United States Patent No. 3,551,091. From system 19 the disinfected liquid, still containing nitrates, flows to the water return system 20. The water return system 20 includes a storage tank 74 and a conduit 76 communicating with the toilet bowl 22. A valve-pump unit 78 operatively associated with the demand actuator 30 is located in the conduit 76. In response to activation of the actuator 30, the unit 78 is opened and disinfected liquid is pumped through the conduit 76 and delivered to the bowl 22 for use as flush water.

In the operation of the system 10, assume that human waste has been deposited in the toilet bowl 22. The actuator 30 is then activated causing an influent high in concentration of nitrogenous compounds from the waste, such as urea, and high in nitrates from the flush water, to delivered from the bowl 22 to the anoxic reactor 14 to be treated biologically therein as described above. Effluent from the anoxic reactor 14 is high in concentration of bicarbonates and ammonium compounds and low in nitrates. The effluent is further treated in the aerobic digestion station 16 to produce a mixed liquid low in concentration of carbonaceous and ammonium compounds and high in nitrates. Liquid containing nitrates is passed through the filtering system 17 where solids, sludges and bacteria are separated and returned to the aerobic digestion station 16. Filtrate high in concentration of nitrates is gathered from the filtering system 17 and passed through the adsorption system 18 for removal of colour and odour and on to a water return system 20 from which clarified liquid high in concentration of nitrates is transferred to the delivery system 12 for use as flush water.

It is thus seen that all of the treated water and the nitrates contained therein, produced in the aerobic chamber, are returned to the anoxic reactor in the flush water by viture of the closed loop arrangement. Nitrates delivered with flush water into the anoxic reactor 14 enhance the digestion of organics in the waste therein to decrease the organic loading on the aerobic digestion station 16 and further aid in the production of bicarbonates for use in the nitrification process in the aerobic station 16. Nitrates produced in liquid in the aerobic station 16 prevent the reduction of sulphates and subsequent production of hydrogen sulphide. It is to be understood that while the system 10 has been particularly described with regard to the production of nitrates in the aerobic station 16 and the beneficial use of these nitrates in the anoxic reactor, it is within the purview of this invention to produce and utilise other oxidised nitrogen compounds in the system 10 in addition to or in place of nitrates, and for this reason the expression "oxidised nitrogen compounds" is used in the appended claims.

It is also seen that biological activity in the chamber 16 ensures degradation of solids not completely reduced in the anoxic reactor 14 and further ensures that rapid accummulation of biological solids in the chamber 16 is prevented. The treatment system 10 thus provides, as a result of the managed use of nitrogen in the system, a method and apparatus for effectively treating toilet waste and re-using flush water while retaining compactness.

**Claims**

1. A multi-stage method of treating toilet waste and recycling treated liquid therefrom wherein said waste is received at a first toilet stage (21), treated liquid filtered from waste at a subsequent stage (17) is passed to the first stage (21), and said waste is transferred, utilising said liquid as a flushing medium, to a process in which organic materials are removed therefrom using bacterial action with the treated liquid then being filtered and returned to the first stage (21), anoxic conditions being produced and maintained in a second stage (14) to which the waste and filtered liquid is passed from the first stage (21), the liquid being transferred from the second stage (14) to a third stage (16) containing biologically active solids and mixed liquid and in which aerobic conditions are produced and maintained for removal of organic materials by bacteria contained in the biologically active solids; mixed liquid containing nitrates being transferred from the third stage (16) to a fourth stage (17) in which the liquid is filtered for re-use in the first stage (21), characterised in that in the third stage (16) in addition to the removal of organic materials ammonium compounds in the transferred liquid are nitrified to oxidised nitrogen compounds with the liquid transferred to the fourth stage (17) being maintained rich in oxidised nitrogen compounds whereby when such enriched liquid is passed to the second stage (14) from the first stage (21) the anoxic conditions in the second stage primarily cause breakdown of oxidised nitrogen compounds in the liquid therein with the production of nitrogen gas and bicarbonates.

2. A method according to claim 1, characterised in that the liquid is passed directly from the third stage (16) to the fourth stage (17) to maximise the amount of oxidised nitrogen compounds in the filtered liquid.

3. A method according to claim 1 or 2, characterised in that the material in the second stage (14) is mechanically agitated to enhance breakdown of oxidised nitrogen compounds into nitrogen and bicarbonates.

4. A method according to claim 1, 2 or 3, characterised in that unfiltered mixed liquid containing nitrates is used continuously to flush filtration means in the fourth stage (17) before being returned from the fourth stage (17) to the third stage (16) with all of the filtered liquid containing nitrates from the fourth stage (17) being transferred to the first toilet stage (21).

5. A method according to any preceding claim, characterised in that aerobic conditions in the third stage (16) are produced and maintained by contact of air with mixed liquid and in which the rate of input of the air is controlled to accomplish evaporation of some of the liquid to maintain constant fluid levels in all of the stages.

6. A closed loop waste treatment and water recycling toilet system for use with the method of any preceding claim comprising a toilet station (21), a treatment zone (14, 16, 17) for bacteriologically purifying waste received from the toilet station (21) and feed means (20) for passing purified liquid separated from the treatment zone to the toilet station (21) for use as flushing medium, the treatment zone including an anoxic reactor station (14), an aerobic digestion station (16) and means (17, 18, 19, 20, 21) for transferring treated liquid from the aerobic station (16) to the anoxic station (14) concurrently with the delivery of untreated toilet waste to the anoxic station (14), said anoxic and aerobic stations being arranged and being in communication with each other so that in use of the system the toilet waste is first treated in the anoxic station (14) and thereafter treated in said aerobic station (16) before being passed *via* a filtering station (17) to said feed means (20), said anoxic station (14) comprising a treatment chamber (36) containing sludge, means (42) for maintaining the chamber (36) under anoxic conditions, and means (26, 28, 34) for transferring liquid to the aerobic station (16), said aerobic station (16) containing biologically active solids and further including aeration means (46) for supplying oxygen to the liquid therein to induce aerobic digestion of the liquid received thereat characterised in that the communication (64) between the aerobic station (16) and the filtering station (17) is such as to minimise the breakdown of oxidised nitrogen compounds in the liquid passed to the filtering station (17), and in that means (38, 40) are provided in the anoxic station (14) for mixing the waste, the sludge, and the liquid containing oxidised nitrogen compounds thereby to induce denitrification of the nitrogen compounds by bacteria contained in the sludge using said waste as a carbon source to produce nitrogen gases and bicarbonates whereby in the aerobic station (16) there is induced nitrification of the ammonium compounds by bacteria in the solids utilising said bicarbonates as a carbon source to produce oxidised nitrogen compounds, the concentration of said ammonium compounds is diminished and also the concentration of carbonaceous compounds is reduced.

7. A system according to claim 6, characterised in that the aerobic station (16) is directly connected to the filtering station (17) for the direct feed of liquid thereto.

8. A system according to claim 7, characterised in that the communication (64) comprises a pump (62) adapted to pass liquid in excess of the capacity of the filtering station (17) continuously to flush the filtering station (17) with excess unfiltered liquid being returned to the aerobic station via a return conduit (71).

**Revendications**

1. Procédé de traitement en plusieurs étages des déchets de toilettes et de recyclage du liquide traité qui en est issu, procédé dans lequel lesdits déchets sont collectés dans un premier étage (21), le liquide traité, qui est séparé par filtration des déchets, dans un étage suivant (17) est envoyé vers le premier étage (21), et lesdits déchets sont transférés, en utilisant ledit liquide comme milieu de chasse vers un procédé dans lequel les matières organiques en sont éliminées en utilisant une action bactérienne, le liquide traité étant alors filtré et recylé vers le premier étage (21), des conditions d'anoxie étant créées et maintenues dans un second étage (14) où les déchets et le liquide filtré provenant du premier étage (21) sont envoyés, le liquide étant transféré du second étage (14) à un troisième étage (16) contenant des matières solides biologiquement actives et du liquide en mélange et où sont créées et maintenues des conditions aérobies pour éliminer les matières organiques par les bactéries contenues dans les matières biologiquement actives; le liquide en mélange contenant des nitrates étant transféré du troisième étage (16) à un quatrième étage (17) où le liquide est filtré en vue d'être réutilisé dans le premier étage (21), caractérisé par le fait que dans le troisième étage (16), en plus de l'élimination des matières organiques, les composés amonium dans le liquide transféré son nitrifiés en composés azotés oxydés, le liquide transféré vers le quatrième étage (17) étant maintenu riche en composés azotés oxydés de façon que, lorsqu'un tel liquide enrichi est envoyé du premier étage (21) au second étage (14), les conditions d'anoxie dans le second étage provoquent essentiellement la dissociation des composés azotés oxydés dans le liquide avec la production de bicarbonates et d'azote gazeux.

2. Procédé selon la revendication 1, caractérisé par le fait que le liquide est directement envoyé du troisième étage (16) au quatrième étage (17) pour rendre maximum la quantité de composés azotés oxydés dans le liquide filtré.

3. Procédé selon l'une des revendications 1 ou 2, caractérisé par le fait que le matériau dans le second étage (14) est soumis à agitation mécanique pour améliorer la dissociation des composés azotés oxydés en bicarbonates et azote.

4. Procédé selon l'une des revendications 1, 2 ou 3, caractérisé par le fait que le liquide mélangé non filtré contenant des nitrates est utilisé en continu pour nettoyer les moyens de filtration dans le quatrième étage (17) avant d'être recyclé du quatrième étage (17) dans le troisième étage (16), tout le liquide filtré contenant des nitrates provenant du quatrième étage (17) étant transféré dans le premier étage (21).

5. Procédé selon l'une des revendications précédentes, caractérisé par le fait que les conditions aérobies dans le troisième étage (16) sont produites et maintenues en mettant en contact le liquide mélangé avec de l'air, étage dans lequel le taux d'entrée de l'air est réglé pour réaliser l'évaporation d'une certaine quantité du liquide en vue de maintenir constants les niveaux de liquide dans tous les étages.

6. Système en cycle fermé de traitement des déchets de toilettes et de recyclage des eaux de toilettes, pour la mise en oeuvre du procédé selon l'une quelconque des revendications précédentes, comprenant un poste de toilettes (21), une zone de traitement (14, 16, 17) pour purifier par la voie bactériologique les déchets provenant du poste de toilettes (21) et des moyens d'alimentation (2) pour faire passer le liquide purifié, séparé de la zone de traitement dans le poste de toilettes (21) en vue de l'utiliser en tant que milieu de chasse, la zone de traitement comportant un poste (14) à réacteur anoxique, un poste de digestion aérobie (16) et des moyens (17, 18, 19, 20) de transfert du liquide traité depuis le poste aérobie (16) dans le poste d'anoxie (14) concurremment avec l'alimentation en déchets de toilettes non traités du poste anoxique (14), lesdits postes anoxique et aérobie étant disposés et communiquant l'un avec l'autre de façon qu'en utilisation du système, les déchets de toilettes soient, en premier lieu, traités dans le poste anoxique (14) puis dans ledit poste aérobie (16) avant d'être envoyés par l'intermédiaire d'un poste de filtration (17) dans lesdits moyens d'alimentation (20), ledit poste anoxique (14) comprenant une chambre de traitement (36) contenant des boues, des moyens (42) pour maintenir la chambre (36) dans des conditions d'anoxie, et des moyens (26, 28, 34) pour transférer le liquide dans le poste aérobie (16), ledit poste aérobie (16) contenant des matières biologiquement actives et renfermant, en outre, des moyens d'aération (46) destinés à fournir de l'oxygène au liquide qui s'y trouve en vue de provoquer la digestion aérobie du liquide qui y est collecté, caractérisé par le fait que la la communication (64) entre le poste aérobie (16) et le poste de filtration (17) est conçue de façon à réduire au minimum la dissociation des composés azotés oxydés dans le liquide envoyé dans le poste de filtration (17), et que les moyens (38,40) sont prévus dans le poste anoxique (14) pour mélanger les déchets, les boues et le liquide contenant des composés azotés oxydés pour provoquer de la sorte la dénitrification des composés azotés par les bactéries contenues dans les boues, en utilisant lesdits déchets comme source de carbone pour produire des gaz à base d'azote et des bicarbonates de façon que dans le poste aérobie (16) il se produise une nitrification des composés amonium par des bactéries contenues dans les matières solides en utilisant lesdits carbonates comme source de carbone pour produire des composés azotés oxydés, la concentration desdits composés amonium étant réduite et la concentration des composés carbonés étant également réduite.

7. Système selon la revendication 6, caractérisé par le fait que le poste aérobie (16) est directement branché sur le poste de filtration (17) pour l'alimentation directe de cette dernière en liquide.

8. Système selon la revendication 7, caractérisé par le fait que la communication (64) comprend une pompe (62) adaptée pour envoyer en continu du liquide en excès de la capacité du poste de filtration (17), de façon à nettoyer le poste de filtration (17), l'excès de liquide non filtré étant recyclé dans le poste aérobie par l'intermédiaire d'un conduit en retour (71).

**Patentansprüche**

1. Mehrstufiges Verfahren zur Behandlung von Toilettenabfall und Recyclisierung von behandelter Flüssigkeit daraus, bei dem der Abfall bei einer ersten Toilettenstufe (21) aufgenommen wird, behandelte Flüssigkeit, die von dem Abfall in einer späteren Stufe (17) abfiltriert wurde, zur ersten Stufe (21) geführt wird und der Abfall unter Verwendung dieser Flüssigkeit als ein Spülmedium zu einem Verfahren übergeführt wird, in dem organische Materialien daraus entfernt werden unter Anwendung der Einwirkung von Bakterien, worauf die behandelte Flüssigkeit filtriert und zur ersten Stufe (21) zurückgeführt wird, anoxische Bedingungen erzeugt und in einer zweiten Stufe (14) erhalten werden, zu der der Abfall und filtrierte Flüssigkeit von der ersten Stufe (21) geleitet werden, die Flüssigkeit von der zweiten Stufe (14) zu einer dritten Stufe (16) übergeführt wird, die biologisch aktive Feststoffe und gemischte Flüssigkeit enthält und worin aerobe Bedingungen erzeugt und erhalten werden zur Entfernung organischer Materialen durch Bakterien, die in den biologisch aktiven Feststoffen enthalten sind; wobei gemischte Flüssigkeit, die Nitrate enthält, von der dritten Stufe (16) zu einer vierten Stufe (17) übergeführt wird, in der die Flüssigkeit zur Wiederverwendung in der ersten Stufe (21) filtriert wird, dadurch gekennzeichnet, daß in der dritten Stufe (16) zusätzlich zur Entfernung von organischen Materialien Ammoniumverbindungen in der übergeführten Flüssigkeit nitrifiziert werden zu oxidierten Stickstoffverbindungen, wobei die Flüssigkeit die zu der vierten Stufe (16) übergeführt wird, reich an oxidierten Stickstoffverbindungen gehalten wird, wodurch, wenn eine derartige angereicherte Flüssigkeit zur zweiten Stufe (14) von der ersten Stufe (21) geleitet wird, die anoxischen Bedingungen in der zweiten Stufe vorwiegend einen Zusammenbruch der oxidierten Stickstoffverbindungen in der Flüssigkeit darin unter Bildung von Stickstoffgas und Bicarbonaten, bewirken.

2. Verfahren nach Anspruch 1, dadurch gekennzeichnet, daß die Flüssigkeit direkt von der dritten Stufe (16) zur vierten Stufe (17) geführt wird, um die Menge der oxidierten Stickstoffverbindungen in der filtrierten Flüssigkeit zu maximalisieren.

3. Verfahren nach Anspruch 1 oder 2, dadurch gekennzeichnet, daß das Material in der zweiten Stufe (14) mechanisch gerührt wird zur Verstärkung des Zusammenbruchs der oxidierten Stickstoffverbindungen zu Stickstoff und Bicarbonaten.

4. Verfahren nach Anspruch 1, 2 oder 3, dadurch gekennzeichnet, daß man die nichtfiltrierte, gemischte Flüssigkeit, die Nitrate enthält, kontinuierlich zur Spülung der Filtrationseinrichtungen in der vierten Stufe (17) vor der Rückkehr aus der vierten Stufe (17) zur dritten Stufe (16) verwendet, wobei die gesamte filtrierte Flüssigkeit, die Nitrate enthält, aus der vierten Stufe (17) zur ersten Toilettenstufe (21) überführt wird.

5. Verfahren nach einem der vorhergehenden Ansprüche, dadurch gekennzeichnet, daß man die aeroben Bedingungen in der dritten Stufe (16) herstellt und erhält durch Kontakt von Luft mit gemischter Flüssigkeit und wobei die Einlaßrate der Luft gesteuert wird, um die Verdampfung von etwas Flüssigkeit zu erzielen, um die Flüssigkeitsniveaus in allen Stufen konstant zu halten.

6. Geschlossener Kreislauf zur Abfallbehandlung und Toilettensystem mit Wasserrecyclisierung zur Verwendung bei dem Verfahren gemäß einem der vorhergehenden Ansprüche, enthaltend eine Toilettenstation (21), eine Behandlungszone (14, 16, 17) zur bakteriologischen Reinigung von Abfall, der aus der Toilettenstation (21) erhalten wurde und Beschickungseinrichtungen (20) zur Leitung von gereinigter Flüssigkeit, abgetrennt aus der Behandlungszone, zur Toilettenstation (21), zur Verwendung als Spülmedium, wobei die Behandlungszone eine anoxische Reaktorstation (14), eine anaerobe Digestionsstation (16) und Einrichtungen (17, 18, 19, 20, 12) zur Überführung von behandelter Flüssigkeit aus der aeroben Station (16) zu der anoxischen Station (14), gleichzeitig mit der Lieferung von unbehandeltem Toilettenabfall zu der anoxischen Station (14) umfaßt, die anoxischen und aeroben Stationen so angeordnet sind und in Kommunikation miteinander stehen, daß bei der Verwendung des Systems der Toilettenabfall zuerst in der anoxischen Station (14) behandelt wird und anschließend in der aeroben Station (16) behandelt wird, bevor er über eine Filterstation (17) zu den genannten Beschickungseinrichtungen (20) geführt wird, wobei die anoxische Station (14) eine Behandlungskammer (36), die Schlamm enthält Einrichtungen (42) zur Erhaltung der Kammer (36) unter anoxischen Bedingungen und Einrichtungen (26, 28, 34) zur Überführung von Flüssigkeit zur aeroben Station (16) umfaßt, die aerobe Station (16) biologisch aktive Feststoffe enthält und darüber hinaus Belüftungseinrichtungen (46) zur Zufuhr von Sauerstoff zu der Flüssigkeit darin umfaßt, um eine aerobe Digestion der dort empfangenen Flüssigkeit zu induzieren, dadurch gekennzeichnet, daß die Kommunikation (64) zwischen der aeroben Station (16) und der Filterstation (17) derart ist, daß der Zusammenbruch der oxidierten Stickstoffverbindungen in der Flüssigkeit die zu der Filterstation (17) geleitet wird, auf ein Minimum herabgesetzt wird und daß Einrichtungen (38, 40) in der anoxischen Station (14) zur Vermischung des Abfalls, des Schlamms und der Flüssigkeit, die oxidierte Stickstoffverbindungen enthält, vorgesehen sind, wodurch die Denitrifikation der Stickstoffverbindungen durch Bakterien, die in dem Schlamm enthalten sind, induziert wird, wobei der Abfall als eine Kohlenstoffquelle verwendet wird, zur Erzeugung von Stickstoffgasen und Bicarbonaten, wodurch in der aeroben Station (16) die Nitrifizierung der Ammoniumverbindungen durch Bakterien in den Feststoffen unter Verwendung dieser Bicarbonate als eine Kohlenstoffquelle induziert wird unter Bildung von oxidierten Stickstoffverbindungen, wobei die Konzentration dieser Ammoniumverbindungen vermindert wird und auch die Konzentration von kohlenstoffhaltigen Verbindungen verringert wird.

7. System nach Anspruch 6, dadurch gekennzeichnet, daß die aerobe Station (16) direkt an die Filterstation (17) zur direkten Beschickung von Flüssigkeit dorthin gebunden ist.

8. System nach Anspruch 7, dadurch gekennzeichnet, daß die Kommunikation (64) eine Pumpe (62) enthält, die dazu geeignet ist, Flüssigkeit im Überschuß zur Kapazität der Filterstation (17) kontinuierlich zur Spülung der Filterstation (17) zu leiten, wobei überschüssige, nicht filtrierte Flüssigkeit zu der aeroben Station über eine Rückfuhrleitung (71) zurückgeführt wird.